(19) Europäisches Patentamt
European Patent Office
Office européen des brevets

(11) Publication number: 0 438 874 A2

# (12) EUROPEAN PATENT APPLICATION

(21) Application number: 90313174.6

(22) Date of filing: 05.12.90

(51) Int. Cl.[5]: C08J 9/06, B32B 27/32, B32B 5/18, C08J 3/28, // C08L23:02

(30) Priority: 05.12.89 JP 315758/89
21.12.89 JP 331839/89

(43) Date of publication of application: 31.07.91 Bulletin 91/31

(84) Designated Contracting States: DE FR GB

(71) Applicant: Tonen Chemical Corporation
1-1, Tsukiji 4-Chome
Chuo-Ku Tokyo (JP)

(72) Inventor: Suzuki, Toshiaki c/o Tonen Chemical Corporation
3-1, Chidori-Cho, Kawasaki-Ku
Kawasaki-Shi Kanagawa-Ken (JP)
Inventor: Nakayama, Takashi, c/o Tonen Chemical Corporation
3-1, Chidori-Cho Kawasaki-Ku, Kawasaki-Shi
Kanagawa-Ken (JP)
Inventor: Kitagawa, Sotoyuki, c/o Tonen Chemical Corporation
3-1, Chidori-Cho, Kawasaki-Ku. Kawasaki-Shi
Kanagawa-Ken (JP)
Inventor: Kuno, Takao, c/o Tonen Chemical Corporation
3-1,Chidori-Cho, Kawasaki-Ku, Kawasaki-Shi
Kanagawa-Ken (JP)

(74) Representative: Holmes, Michael John et al
Frank B. Dehn & Co. Imperial House 15-19 Kingsway
London WC2B 6UZ (GB)

## (54) Method of producing thick, integral cross-linked foam of thermoplastic polyolefin.

(57) A thick, integral cross-linked foam of a thermoplastic polyolefin such as crystalline polyolefin and olefinic elastomer is produced by (a) forming a polyolefin composition containing a foaming agent into a sheet at a temperature lower than the decomposition temperature of the foaming agent; (b) irradiating the sheet to cause cross-linking thereof; (c) laminating a plurality of the cross-linked sheets; (d) heating the resulting laminate under pressure at a temperature not lower than the decomposition temperature of the foaming agent; and (e) liberating the pressure of the laminate, thereby integrally foaming it. The pulverized products of the cross-linked sheet may also be formed into an integral foam.

EP 0 438 874 A2

# METHOD OF PRODUCING THICK, INTEGRAL CROSS-LINKED FOAM OF THERMOPLASTIC POLYOLEFIN

The present invention relates to a method of producing a sufficiently thick, integral cross-linked foam of a thermoplastic polyolefin, particularly to a method of producing a thick, integral cross-linked foam of a thermoplastic polyolefin having uniform, fine cells and excellent softness, mechanical strength and heat resistance.

Polyolefin foams are excellent in mechanical strength, softness, hand and feeling, heat resistance, chemical resistance, etc., and are widely used as interior materials of automibiles, heat-insulating materials, cushion materials for sport goods and food wrappings, sound absorbing materials, exterior materials, etc. Among them, foams made of thermoplastic olefinic elastomers have high elasticity in addition to the above-mentioned properties.

As a method of producing such a cross-linked polyolefin foam, Japanese Patent Laid-Open No. 61-283633 discloses a method comprising the steps of charging a foamable composition comprising a polyolefin, a foaming agent, a foaming aid, a cross-linking agent and fillers into a first die, heating the foamable composition under pressure for a certain period of time, releasing the pressure to cause the first foaming of the composition at a foaming ratio of 2-7 times to provide a primary foam, removing this primary foam as an intermediate product from the first die, heating the intermediate product in the second die under pressure for a certain period of time to decompose the remaining foaming agent, thereby causing secondary foaming, cooling it after keeping it in the second die, and then removing the resulting foam from the second die. However, this method fails to provide a foam having sufficiently uniform and fine cells, and further it is complicated in a series of the steps and needs a lot of time in a production cycle.

Particularly, with respect to polypropylene having a low viscoelasticity in a molten state among the polyolefin, it is difficult to produce a polypropylene foam. Accordingly, various attempts have been proposed to produce a polypropylene foam.

Japanese Patent Laid-Open No. 61-171742 discloses a method of producing a cross-linked polypropylene foam by melt-blending a mixture comprising (A) 60-95 parts by weight of polypropylene having a melt flow rate of 0.1-50 g/10 minutes, (B) 5-40 parts by weight of a copolymer of propylene and an $\alpha$-olefin having carbon atoms of 4-20 which has a melt flow rate of 0.05-20 g/10 minutes, a propylene content of 55-85 mol %, and a heat of crystal fusion of 25-70 Joule/g determined by thermoanalysis using a differential scanning calorimeter, (C) 0.05-0.5 parts by weight of a radical generator per 100 parts by weight of (A) + (B), and (D) 0.1-1 parts by weight of a cross-linking aid per 100 parts by weight of (A) + (B), at a temperature not lower than the decomposition temperature of the radical generator, thereby causing the cross-linking reaction of the mixture ; adding (E) 0.5-5 parts by weight of a foaming agent to 100 parts by weight of the resulting cross-linked composition ; blending them at a temperature lower than the decomposition temperature of the foaming agent (E) ; forming the resulting mixture into a sheet ; and then heating the sheet to provide a foamed sheet. However, by this method, it is difficult to produce a foam having sufficiently fine cells and high foaming ratio. Further, since the foaming agent is added after the production of the cross-linked polypropylene product to effect the foaming of the cross-linked polypropylene product, the production procedure is rather complicated, needing a lengthy production cycle.

Japanese Patent Publication No. 46-19854 discloses a method of producing a polypropylene foam having a high foaming ratio, comprising the steps of mixing a propylene copolymer having 0.05-10 weight % of a divinyl benzene content with a foaming agent, cross-linking the propylene copolymer in the presence of organic peroxides or by irradiation, and then forming it into a proper shape while heating it under a normal pressure or an increased pressure, and then releasing the pressure to cause the foaming of the composition. Further, Japanese Patent Publication No. 46-38716 discloses a method of producing a cross-linked polypropylene foam by using as a polypropylene resin a crystalline propylene/ethylene random copolymer having a random coefficient (R) of 0.7 or less, an isotactic degree of 40% or more, and a melt index MI (230°C) of 0.1-30.

In the above-mentioned production methods, however, foams cross-linked by organic peroxides fail to have sufficiently fine cells. With respect to those cross-linked by irradiation, they have fine cells, but their cross-linked sheets are restricted in thickness, failing to produce sufficiently thick foamed products. Thus, there has been no method of producing a polyolefin foam having sufficiently fine cells, a high foaming ratio and a relatively large thickness.

Also, with respect to foams made of thermoplastic olefinic elastomers such as an ethylene-propylene rubber (EPR) and an ethylene-propylene-diene copolymer (EPDM), etc., they are generally produced by cross-linking thermoplastic olefinic elastomers by heating in the presence of organic peroxides, and heating them to a temperature not lower than the decomposition temperatures of foaming agents under normal pressure (for instance, Japanese Patent Laid-Open No. 56-79131).

However, the olefinic elastomer foams produced by this method have relatively large cells which are poor in uniformity, and their softness and mechanical strength such as tensile strength, tensile elongation, tear strength, etc. are still poor.

Accordingly, an object of the present invention is to provide a method of producing a thick, integral cross-linked foam of a thermoplastic polyolefin having uniform, fine cells, and excellent heat resistance stability and mechanical strength, and further having a sufficient thickness.

As a result of intense research in view of the above object, the inventors have found that by forming a thermoplastic composition containing a foaming agent into a sheet, cross-linking it by irradiation, laminating a plurality of cross-linked sheets, heating the laminate under a pressure for a certain period of time and then releasing the pressure to effect foaming thereof, it is possible to produce a cross-linked foam having sufficiently fine cells, and the resulting cross-linked foam is an integral product having a sufficient thickness. Further, by pulverizing the cross-linked product and heating it in a closed high-pressure vessel to foam the pulverized product, the same effects can be obtained. The present invention has been made based on these findings.

Thus, the method of producing a thick, integral cross-linked foam of a thermoplastic polyolefin according to an embodiment of the present invention comprises the steps of :

(a) forming a polyolefin composition containing a foaming agent into a sheet at a temperature lower than the decomposition temperature of the foaming agent ;
(b) irradiating the sheet to cause cross-linking thereof ;
(c) laminating a plurality of the cross-linked sheets ;
(d) heating the resulting laminate under pressure at a temperature not lower than the decomposition temperature of the foaming agent ; and
(e) liberating the pressure of the laminate, thereby integrally foaming it.

The method of producing a thick, integral cross-linked foam of a thermoplastic polyolefin according to another embodiment of the present invention comprises the steps of :

(a) forming a polyolefin composition containing a foaming agent into a sheet at a temperature lower than the decomposition temperature of the foaming agent ;
(b) irradiating the sheet to cause cross-linking thereof ;
(c) pulverizing the cross-linked sheet ;
(d) heating the pulverized product under pressure at a temperature not lower than the decomposition temperature of the foaming agent ; and
(e) liberating the pressure of the product, thereby integrally foaming it.

The term "thermoplastic polyolefin" used herein means not only a crystalline polyolefin but also an olefinic elastomer. A mixture of the crystalline polyolefin and the olefinic elastomer is also included in the thermoplastic polyolefin in the present invention.

The crystalline polyolefins which may be used in the present invention include homopolymers of α-olefins such as ethylene, propylene, butene-1, pentene-1, hexene-1, 4- methylpentene-1, etc. ; copolymers of ethylene and propylene or other α-olefins ; and copolymers of these α-olefins. Among them, various types of polyethylenes such as low-density polyethylene, linear low-density polyethylene, medium-density polyethylene and high-density polyethylene, and polypropylene are preferable. When polypropylene is used, it is not restricted to a homopolymer of propylene, and any random or block copolymers of propylene and other α-olefins, in which the propylene content is 50 mol % or more and preferably 80 mol % or more, may be used. The comonomers copolymerizable with propylene are ethylene and other α-olefins, and ethylene is particularly preferable. Accordingly, the term "polypropylene" used herein means that it is not restricted to a homopolymer of propylene but it includes any types of propylene copolymers.

The thermoplastic olefinic elastomer which may be used in the present invention include copolymer rubbers consisting of two or more α-olefins such as ethylene, propylene, 1-butene, 1-hexene, 4-methyl-1-pentene, etc. or copolymers of α-olefins with other monomers. As copolymer rubbers consisting of two or more α-olefins, there are an ethylene-propylene rubber (EPR) and an ethylene-propylene-diene copolymer (EPDM). The dienes in the ethylene-propylene-diene copolymer (EPDM) include non-conjugated dienes such as dicyclopentadiene, 1,4-hexadiene, cyclooctadiene, methylene norbornene, etc., and conjugated dienes such as butadiene, isoprene, etc. Particularly preferable is EPDM containing a non-conjugated diene. The other monomers copolymerizable with α- olefins include vinyl acetate, acrylate, etc. Typical examples of the copolymers of α -olefins and other monomers are an ethylene-vinyl acetate copolymer (EVA), etc.

The ethylene-propylene rubber (EPR) used in the present invention preferably comprises 50-80 mol.% of a repeating unit derived from ethylene, 20-50 mol % of a repeating unit derived from propylene. The more preferred range is 60-70 mol % for the ethylene repeating unit and 25-35 mol % for the propylene repeating unit.

The EPR has a melt index (190°C, 2.16 kg load) of 0.5-15 g/10 minutes, preferably 3-9 g/10 minutes.

The ethylene-propylene-diene copolymer (EPDM) used in the present invention preferably comprises 40-70 mol.% of a repeating unit derived from ethylene, 30-60 mol % of a repeating unit derived from propylene, and 1-10 mol % of a repeating unit derived from a diene compound. The more preferred range is 50-60 mol % for the ethylene repeating unit, 40-50 mol % for the propylene repeating unit, and 3-6 mol % for the diene repeating unit.

Further, the EPDM has a Mooney viscosity $ML_{1+4}$ (100°C) of 40-100, preferably 60-80.

The ethylene-propylene copolymer rubber (EPR) and the ethylene-propylene-diene copolymer (EPDM) may further contain additional repeating units derived from α-olefins such as butene-1, 4-methyl-pentene-1, etc., within such a range as not to deteriorate the properties of the copolymers, for instance, within 10 mol %.

The ethylene-vinyl acetate copolymer (EVA) used in the present invention means a copolymer having 3 weight % or more of a vinyl acetate repeating unit. When the vinyl acetate content is less than 3 weight %, the resulting thermoplastic elastomer composition shows poor rubber elasticity. The preferred vinyl acetate content is 5-30 weight %.

The ethylene-vinyl acetate copolymer (EVA) preferably has a melt index (190°C, 2.16 kg load) within the range of 0.3-50 g/10 minutes.

The thermoplastic polyolefins (crystalline polyolefins and olefinic elastomers) may be used alone or in combination.

In the present invention, the thermoplastic elastomer composition can be improved with respect to its heat resistance and mechanical strength by adding polypropylene. Such polypropylene usually has a melt flow rate (MFR, measured according to JIS K7210, 2.16 kg load, 230°C) of 0.5-80 g/10 minutes.

The amount of the polypropylene added to the olefinic elastomer is preferably 10-70 parts by weight per 100 parts by weight of the thermoplastic olefinic elastomer, and particularly 30-50 parts by weight. When the amount of the polypropylene is lower than 10 parts by weight, sufficient improvement of heat resistance and mechanical strength cannot be obtained, and when it exceeds 70 parts by weight, the resulting thermoplastic olefinic elastomer composition shows poor elasticity.

In the present invention, the thermoplastic olefinic elastomer composition may contain a butyl rubber.

The butyl rubber used in the method of the present invention is not restricted to a rubber produced by copolymerizing isobutylene with a small amount of isoprene, but may include a halogenated butyl rubber containing 1.0-3.0% of bromine, chlorine, etc.

This butyl rubber preferably has a Mooney viscosity ,$ML_{1+8}$ (100°C) of 40-90, and an unsaturation degree of 0.5-5 mol %. In the case of the halogenated butyl rubber, its halogen content is usually 0.5-4.0 weight %.

The amount of such butyl rubber is preferably 3-30 parts by weight per 100 parts by weight of the thermoplastic olefinic elastomer, more preferably 5-20 parts by weight. When the amount of the butyl rubber is less than 3 parts by weight, its effects are not sufficient, and when it exceeds 30 parts by weight, the percentage of the thermoplastic olefinic elastomer becomes too small, resulting in poor elasticity.

In the present invention, to improve the formability of the thermoplastic olefinic elastomer composition, a mineral oil-type softening agent can be added. The mineral oil-type softening agent may be high-boiling point petroleum fractions such as paraffins, naphthenes, aromatic oils, etc.

The amount of the mineral oil-type softening agent is preferably 3-40 parts by weight, particularly 5-20 parts by weight per 100 parts by weight of the thermoplastic olefinic elastomer. When the amount is less than 3 parts by weight, sufficient effects cannot be achieved, and when it exceeds 40 parts by weight, the heat resistance and the mechanical strength of the thermoplastic olefinic elastomer composition decrease, and the mineral oil-type softening agent oozes out, deteriorating the appearance of the final product.

The foaming agent which may be used in the present invention is a compound which is in a liquid state or in a solid state at room temperature, but is decomposed or vaporized at a temperature higher than the melting points of the polyolefin components. Unless it adversely affects the molding and the cross-linking reaction of the polyolefin composition, any foaming agent may be used. The foaming agent preferably has a decomposition temperature of 180-270°C. Specific examples of such foaming agent include azodicarbonamide, azodicarboxylic acid metal salts, dinitrosopentamethylene tetramine, hydrazodicarbonamide, p-toluenesulfonyl semicarbazide, s-trihydrazinotriadine, etc. The amount of the foaming agent added is 3-30 parts by weight, preferably 5-20 parts by weight per 100 parts by weight of the total amount of the polyolefin composition.

In the present invention, to conduct the cross-linking reaction by irradiation efficiently, it is preferable to add a cross-linking aid. The cross-linking aid which may be used in the present invention include trimethylolpropane trimethacrylate, trimethylolpropane triacrylate, pentaerithritol pentaacrylate, diallylphthalate, diallylmaleate, etc. The amount of the cross-linking aid is 0.05-5.0 parts by weight, preferably 0.1-3.0 parts by weight per 100 parts by weight of the polyolefin.

In addition, to improve the properties of the thick, integral cross-linked foam of a thermoplastic polyolefin, other various additives such as rubbery materials, other resins, pigments, fillers, flame retardants, anti-oxidants, etc. may be added.

The first method of producing the thick, integral cross-linked foam of a thermoplastic polyolefin according to the present invention will be explained below.

The thermoplastic polyolefin, the foaming agent, and if necessary, a cross-linking aid, and other additives are blended by a kneader, Henschel mixer, an extruder, etc. The blending temperature is preferably determined depending upon the type of the thermoplastic polyolefin used.

The blend is then extruded through a die of an extruder, etc. to form a sheet. In this case, the extrusion temperature can be controlled properly depending upon the polyolefin used. The thickness of the sheet is determined so that the sheet is easily cross-linked by irradiation. The preferred thickness of the sheet is 0.5-5 mm, more preferably 1-3 mm.

The resulting sheet is subjected to cross linking. The cross linking can be effected by irradiation of α-ray, β-ray (electron beam), γ-ray, etc. Among them, electron beam is preferable to conduct the cross linking. The irradiation amount may vary depending upon the type and amount of the cross-linking aid and the level of the cross-linking required, but it is generally 0.1-50 Mrad, preferably 1-30 Mrad.

The cross-linking degree of the sheet is preferably 10-80% to obtain a thick, integral foam with excellent softness, mechanical strength and heat resistance. If the cross-linking degree is lower than 10%, the melt viscosity of the polyolefin is too low to have a high foaming ratio. On the other hand, if the cross-linking degree exceeds 80%, the melt viscosity of the polyolefin becomes too large, resulting in continuous cells. The more preferred cross-linking degree is 20-60%.

In the first method of the present invention, the sheet thus cross-linked are laminated. The laminate has a thickness which may be properly determined depending upon the foarning ratio, the thickness of each sheet, the desired thickness of the resulting foam, etc. For instance, when the desired thickness is 30 mm, and when the foaming ratio in a thickness direction is about 3 times (foaming ratio is approximately 30 times), the laminate should have 10 cross-linked sheets each having 1 mm in thickness.

This laminate is heated at a high temperature and high pressure for a certain period of time. In this case, the laminate is preferably kept in a closed high-pressure vessel such as a die, and the heating temperature is preferably 220-250°C and the pressure is preferably 50-100 kg/cm$^2$. Under such temperature and pressure conditions, the heating time is preferably 2-20 minutes.

After keeping the laminate under pressure for a certain period of time within the above range, the pressure is released to cause foaming. In this case, to achieve instantaneous foaming, the laminate should be heated to 220-260°C. And the foaming ratio is generally 5-50 times, although it may be controlled by the amount of the foaming agent, the temperature, the pressure, etc.

Next, the second method of producing the thick, integral cross-linked foam of a thermoplastic polyolefin according to the present invention will be explained below.

Up to the step of forming a cross-linked sheet, the second method is not different from the first method.

In the second method, the sheet is pulverized. The pulverization may be conducted mechanically using a turbo mill, etc. Pulverized products are preferably as small as 15-30 mesh by taking into consideration a filling ratio of the pulverized products in the closed high-pressure vessel.

Next, the pulverized products are charged into the closed high-pressure vessel. In this case, it is preferable to conduct evacuation by repeatedly pressurizing and evacuating the pulverized product. The filling ratio of the pulverized product in the closed high-pressure vessel may be determined depending upon the thickness of the desired foam and a foaming ratio.

After heating at high temperature and pressure for a certain period of time, the pressure is released to cause foaming. The conditions in this step, such as temperature, pressure, time, etc., may be the same as in the case where the sheets are laminated.

The polyolefin foam thus produced, either by the first or second method, has extremely fine cells. Their average diameter is about 30 μm or less, and their distribution is substantially within the range of 20-40 μm. Also, the foam obtained by the method of the present invention has a thickness of up to about 40 mm or more, and the resulting foam is a completely integral one. Thus, the final foamed product of the present invention is much thicker than the foamed product of a sheet-like article produced by irradiation and foaming (thickness : about 2-5 mm).

In the case of the crystalline polyolefin, the foaming time in the present invention is 3-8 minutes, which is much shorter than the foaming time when those cross-linked by organic peroxides are pressurized and foamed (9-30 minutes).

In the case of the olefinic elastomer, too, the foaming time is sufficiently short. Accordingly, the method of the present invention shows extremely improved efficiency.

The present invention will be explained in further detail by way of the following Examples.

Incidentally, in each Example and Comparative Example, the resins used are as follows :

[1] Polypropylene

(1) HPP : Polypropylene homopolymer
[J215, manufactured by Tonen Sekiyukagaku K.K., melt flow rate (MFR, 230°C, 2.16 kg load) = 15 g/10 minutes]
(2) RPP : Propylene-ethylene random copolymer
[F409BE, manufactured by Tonen Sekiyukagaku K.K., melt flow rate (MFR, 230°C, 2.16 kg load) = 9 g/10 minutes, ethylene content = 3.6 weight %]
(3) BPP : Propylene-ethylene block copolymer
[BJ315, manufactured by Tonen Sekiyukagaku K.K., melt flow rate (MFR, 230°C, 2.16 kg load) = 15 g/10 minutes, ethylene content = 6.0 weight %]

[2] Polyethylene
(1) Linear low-density polyethylene (I) (LLDPE (I))
[GML2612, manufactured by Nippon Unicar K.K., melt index (MI, 190°C, 2.16 kg load) = 12 g/10 minutes, density = 0.926 g/cm$^3$]
(2) Linear low-density polyethylene (II) (LLDPE (II))
[G5371, manufactured by Nippon Unicar K.K., melt index (MI, 190°C, 2.16 kg load) = 12 g/10 minutes, density = 0.926 g/cm$^3$]
(3) Low-density polyethylene (LDPE)
[DF01N, manufactured by Nippon Unicar K.K., melt index (MI, 190°C, 2.16 kg load) = 4 g/10 minutes, density = 0.924 g/cm$^3$]
(4) High-density polyethylene (HDPE)
[J6311, manufactured by Tonen Sekiyukagaku K.K., melt index (MI, 190°C, 2.16 kg load) = 9 g/10 minutes, density = 0.955 g/cm$^3$]

[3] Ethylene-vinyl acetate copolymer
EVA (I) [NVC3808, manufactured by Nippon Unicar K.K., melt index (MI, 190°C, 2.16 kg load) = 5 g/10 minutes, density = 0.930 g/cm$^3$, VA content = 6.0 weight %]

[4] Thermoplastic olefinic elastomer
(1) EVA (II) : Ethylene-vinyl acetate copolymer
[DQDJ 3269, manufactured by Nippon Unicar K.K., melt index (MI, 190°C, 2.16 kg load) = 20 g/10 minutes, density = 0.950 g/cm$^3$, vinyl acetate content = 28 weight %]
(2) EPDM : Ethylene-propylene-diene copolymer
[VISTALON 3708, manufactured by Exxon Chemical Japan, Ltd.]
(3) EPR : Ethylene-propylene copolymer
(VISTALON 707, manufactured by Exxon Chemical Japan, Ltd.]

[5] Butyl rubber
BR : [EXXON BUTYL RUBBER 065, manufactured by Exxon Chemical Japan, Ltd., Mooney viscosity $ML_{1+8}$ (100°C) = 45, unsaturation degree = 0.8 mol %]

[6] Mineral oil-type softening agent
SO : [PW380, manufactured by Idemitsu Kosan Co., Ltd., pour point = -15°C]

Examples 1-4 and Comparative Example 1

100 parts by weight of a resin component consisting of polypropylene alone or polypropylene and linear low-density polyethylene as shown in Table 1 was mixed with 15 parts by weight of azodicarbonamide (manufactured by Eiwa Kasei K.K.) as a foaming agent, 1.0 parts by weight of trimethylolpropane trimethacrylate (manufactured by Shin-Nakamura Kagaku K.K.) as a cross-linking aid, and 0.5 parts by weight of tetrakis [methylene-3 (3,5-di-tert-butyl-4-hydroxyphenyl) propionate] methane (*Irganox 1010*, manufactured by Chiba Geigy) as an antioxidant, and blended by means of a Henschel mixer at 30°C and 500 rpm for 2 minutes. The resulting mixture was introduced into a 50-mm-ϕ single screw extruder having a T die through which it was extruded at 170°C to produce a sheet of 1.0 mm in thickness.

This sheet was irradiated by an electron beam of 750 kV to cause cross-linking. Incidentally, the amount of electron beam irradiated was determined such that the cross-linking degree was about 45%. Here, the cross-linking degree is defined by a percentage of a gel insoluble in boiling xylene.

10 cross-linked sheets were laminated and placed in a closed high-pressure vessel of 10 mm × 50 mm × 70 mm, and pressurized at 165°C and 50-70 atms. Finally, the closed high-pressure vessel was opened at 230°C to provide an integral cross-linked foam of 30 mm × 150 mm × 210 mm.

The integral cross-linked polypropylene foam thus obtained was measured with respect to cross-linking degree, density, compression hardness, compression set and heat resistance (dimensional stability). Also, the cells of the foam were microscopically observed.

The results are shown in Table 1 together with the cross-linking method, the foaming method and the foaming time.

Incidentally, for comparison, with respect to sheets (thickness : 3 mm) foamed under normal pressure from the resin composition in Example 4, the above properties were similarly measured. The results are also shown in Table 1.

Comparative Example 2

100 parts by weight of the resin component in Example 3 was mixed with 15 parts by weight of azodicarbonamide (manufactured by Eiwa Kasei K.K.) as a foaming agent, 0.5 parts by weight of trimethylolpropane trimethacrylate (manufactured by Shin-Nakamura Kagaku K.K.) as a cross-linking aid, 0.5 parts by weight of tetrakis [methylene-3 (3,5-di-tert-butyl-4-hydroxyphenyl) propionate] methane (*Irganox 1010*, manufactured by Chiba Geigy) as an antioxidant, and 0.5 parts by weight of 2,5-dimethyl-2,5 -di (tert-butylperoxy) hexane as a cross-linking agent, and the resulting mixture was formed into a sheet in the same manner as in Example 1.

This sheet was heated at 170°C for 30 minutes to cause a cross-linking reaction up to a cross-linking degree of about 45%. The cross-linked sheet was foamed in the same manner as in Example 3.

The cross-linked polypropylene foam thus obtained was measured with respect to cross-linking degree, density, compression hardness, compression set and heat resistance (dimensional stability). Also, the cells of the foam were microscopically observed.

The results are shown in Table 1 together with the cross-linking method, the foaming method and the foaming time.

Comparative Example 3

100 parts by weight of the resin component in Example 4 was mixed with 15 parts by weight of azodicarbonamide (manufactured by Eiwa Kasei K.K.) as a foaming agent, 0.5 parts by weight of trimethylolpropane trimethacrylate (manufactured by Shin-Nakamura Kagaku K.K.) as a cross-linking aid, 0.5 parts by weight of tetrakis [methylene-3 (3,5-di-tert-butyl-4-hydroxyphenyl) propionate] methane (*Irganox 1010*, manufactured by Chiba Geigy) as an antioxidant, and 0.5 parts by weight of 2,5-dimethyl-2,5-di (tert-butylperoxy) hexane as a cross-linking agent, and the resulting mixture was formed into a sheet in the same manner as in Example 1.

This sheet was heated at 170°C for 20 minutes to cause a cross-linking reaction up to a cross-linking degree of about 45%. The cross-linked sheet was foamed in the same manner as in Example 3.

The cross-linked polypropylene foam thus obtained was measured with respect to cross-linking degree, density, compression hardness, compression set and heat resistance (dimensional stability). Also, the cells of the foam were microscopically observed.

The results are shown in Table 1 together with the cross-linking method, the foaming method and the foaming time.

Example 5

The cross-linked sheet obtained in Example 3 was pulverized to 30 mesh by a turbo mill, and the pulverized products were charged into a closed high-pressure vessel of 10 mm × 50 mm × 70 mm. They were pressurized to 50-70 atms at 165°C, and finally released from the closed high-pressure vessel at 230°C to produce an integral foam of 30 mm × 150 mm × 210 mm.

The integral cross-linked polypropylene foam thus obtained was measured with respect to cross-linking degree, density, compression hardness, compression set and heat resistance (dimensional stability). Also, the cells of the foam were microscopically observed. The results are shown in Table 1.

Table 1

| Example No. | 1 | 2 | 3 | 4 | 5 |
|---|---|---|---|---|---|
| Composition of Resin Components (Parts by Weight) | | | | | |
| HPP | 100 | – | – | – | – |
| BPP | – | 100 | – | – | – |
| RPP | – | – | 100 | 50 | 100 |
| LLDPE(I) | – | – | – | 50 | – |
| Production Conditions | | | | | |
| Cross-linking Method(1) | EB | EB | EB | EB | EB |
| Foaming Method (2) | P | P | P | P | P |
| Foaming Time (minutes) | 5 | 5 | 4.5 | 5 | 3 |
| Properties of Cross-linked Foam | | | | | |
| Cross-Linking Degree (%) | 43 | 45 | 47 | 47 | 45 |
| Density after Foaming ($g/cm^3$) | 0.034 | 0.033 | 0.032 | 0.033 | 0.033 |
| Compression Hardness(3) ($kg/cm^2$) | 2.8 | 2.5 | 2.0 | 1.2 | 3.0 |
| Compression Set(4) (%) | 8.0 | 6.5 | 5.0 | 3.0 | 6.0 |
| Heat Resistance (Dimensional Stability) (5) (%) | 0.1/0.2 | 0.4/0.3 | 0.7/0.5 | 1.2/0.9 | 0.2/0.2 |
| Cells | Fine | Fine | Fine | Fine | Fine |

Table 1 (Continued)

| Comparative Example No. | 1 | 2 | 3 |
|---|---|---|---|
| Composition of Resin Components (Parts by Weight) | | | |
| H P P | – | – | – |
| B P P | – | – | – |
| R P P | 50 | 100 | 50 |
| L L D P E (I) | 50 | – | 50 |
| Production Conditions | | | |
| Cross-linking Method(1) | EB | PO | PO |
| Foaming Method (2) | NP | P | P |
| Foaming Time (minutes) | 2* | 12.5 | 25 |
| Properties of Cross-linked Foam | | | |
| Cross-Linking Degree (%) | 47 | 44 | 46 |
| Density after Foaming ($g/cm^3$) | 0.033 | 0.033 | 0.034 |
| Compression Hardness(3) ($kg/cm^2$) | 0.8 | 1.3 | 0.5 |
| Compression Set(4) (%) | 5.0 | 11.0 | 8.0 |
| Heat Resistance (Dimensional Stability) (5) (%) | 1.4/1.3 | 1.7/1.5 | 1.8/1.9 |
| Cells | Slightly Large | Large | Large |

Note * : Time during which the foaming was conducted in an air oven at 250°C under normal pressure.

Note

(1) : "EB " denotes those cross-linked by irradiation by electron beam, and "PO " denotes those cross-linked by an organic peroxide.

(2) : "P" means a case where the heating was conducted under pressure and then the pressure to cause foaming was released, and "NP means a case where the heating was conducted under normal pressure to cause foaming.

(3) Measured according to JIS K6767.

(4) Measured according to JIS K6767, and expressed by the following equation :

$$\text{Compression Set (\%)} = \frac{\text{(Initial thickness - thickness after testing)}}{\text{Initial thickness}} \times 100$$

(5) Determined by the change ratio of dimension measured after keeping in an air oven at 120°C for 22 hours.

As is clear from Table 1, the foams in Examples 1-4 which were produced by laminating polypropylene sheets cross-linked by irradiation and then pressurizing and foaming, are superior to those in Comparative Example 1 (foamed under normal pressure) and those in Comparative Examples 2 and 3 (cross-linked by an organic peroxide) in the fineness of cells, softness, heat resistance and dimension stability after heating. In addition, in the case where the article cross-linked by irradiation is pressurized and foamed according to the present invention, the foaming time is extremely reduced as compared with the case where the article cross-linked by organic peroxides is pressurized and foamed.

Examples 6-9

100 parts by weight of a polyethylene resin component as shown in Table 2 was mixed with 15 parts by weight of azodicarbonamide (manufactured by Eiwa Kasei K.K.) as a foaming agent, 0.1 parts by weight of trimethylolpropane trimethacrylate (manufactured by Shin-Nakamura Kagaku K.K.) as a cross-linking aid, and 0.5 parts by weight of tetrakis [methylene-3 (3,5-di-tert-butyl-4-hydroxyphenyl) propionate] methane (*Irganox 1010*, manufactured by Chiba Geigy) as an antioxidant, and blended by means of a Henschel mixer at 30°C and 500 rpm for 2 minutes. The resulting mixture was introduced into a 50-mm-ϕ single screw extruder having a T die through which it was extruded at 165°C to produce a sheet of 1.0 mm in thickness.

This sheet was irradiated by an electron beam of 750 kV to cause cross-linking. Incidentally, the amount of electron beam irradiated was determined such that the cross-linking degree was about 40%.

10 cross-linked sheets were laminated and placed in a closed high-pressure vessel of 10 mm × 50 mm × 70 mm, and pressurized at 165°C and 50-70 atms. Finally, the closed high-pressure vessel was opened at 230°C to provide an integral cross-linked foam of 30 mm × 150 mm × 210 mm.

The integral cross-linked polyethylene foam thus obtained was measured with respect to cross-linking degree, density and compression set. Also, the cells of the foams were microscopically observed.

The results are shown in Table 2 together with the cross-linking method, the foaming method and the foaming time.

Comparative Examples 4-7

Examples 6-9 were repeated except for mixing 100 parts by weight of the polyethylene resin component with 15 parts by weight of azodicarbonamide (manufactured by Eiwa Kasei K.K.) as a foaming agent, 0.1 parts by weight of trimethylolpropane trimethacrylate (manufactured by Shin-Nakamura Kagaku K.K.) as a cross-linking aid, 0.5 parts by weight of tetrakis [methylene-3 (3,5-di-tert-butyl-4-hydroxyphenyl) propionate] methane (*Irganox 1010*, manufactured by Chiba Geigy) as an antioxidant, and 0.5 parts by weight of dicumyl peroxide (PERCUMYL D manufactured by Nippon Oil and Fats Co., Ltd.) as a cross-linking agent to form a sheet.

This sheet was heated at 170°C for 30 minutes to cause a cross-linking reaction up to a cross-linking degree of about 40%. The cross-linked sheet was then foamed in the same manner as in Example 6.

The cross-linked polyethylene foam thus obtained was measured with respect to cross-linking degree, density and compression set. Also, the cells of the foams were microscopically observed.

The results are shown in Table 2 together with the cross-linking method, the foaming method and the foaming time.

Table 2

| Example No. | 6 | 7 | 8 | 9 |
|---|---|---|---|---|
| Composition of Resin Components (Parts by Weight) | | | | |
| LDPE | 100 | – | – | – |
| LLDPE (II) | – | 100 | – | – |
| HDPE | – | – | 100 | – |
| EVA (I) | – | – | – | 100 |
| Production Conditions | | | | |
| Cross-linking Method(1) | EB | EB | EB | EB |
| Foaming Method (2) | P | P | P | P |
| Foaming Time (minutes) | 4 | 6 | 7.5 | 4 |
| Properties of Cross-linked Foam | | | | |
| Cross-Linking Degree (%) | 41 | 42 | 39 | 43 |
| Density after Foaming ($g/cm^3$) | 0.032 | 0.033 | 0.033 | 0.032 |
| Compression Set(4) (%) | 7.0 | 4.3 | 6.0 | 2.0 |
| Cells | Fine | Fine | Fine | Fine |

Table 2 (Continued)

| Comparative Example No. | 4 | 5 | 6 | 7 |
|---|---|---|---|---|
| Composition of Resin Components (Parts by Weight) | | | | |
| LDPE | 100 | – | – | – |
| LLDPE (II) | – | 100 | – | – |
| HDPE | – | – | 100 | – |
| EVA (I) | – | – | – | 100 |
| Production Conditions | | | | |
| Cross-linking Method(1) | PO | PO | PO | PO |
| Foaming Method (2) | P | P | P | P |
| Foaming Time (minutes) | 8.5 | 9 | 10 | 5 |
| Properties of Cross-linked Foam | | | | |
| Cross-Linking Degree (%) | 42 | 43 | 40 | 42 |
| Density after Foaming (g/$cm^3$) | 0.032 | 0.032 | 0.033 | 0.032 |
| Compression Set(4) (%) | 9.0 | 8.0 | 9.5 | 3.5 |
| Cells | Large | Large | Large | Large |

As is clear from Table 2, the foams in Examples 6-9 which were produced by laminating polyethylene sheets cross-linked by irradiation and then pressurizing and foaming, are superior to those in Comparative Examples 4-7 (cross-linked by an organic peroxide) in the fineness of cells and softness. In addition, in the case where the article cross-linked by irradiation is pressurized and foamed according to the present invention, the foaming time is extremely reduced as compared with the case where the article cross-linked by organic peroxides is pressurized and foamed.

Examples 10 and 11 and Comparative Example 8

100 parts by weight of a resin component consisting of a thermoplastic olefinic elastomer, polypropylene, a butyl rubber and if necessary a mineral oil-type softening agent as shown in Table 3 was mixed with 15 parts by weight of azodicarbonamide (manufactured by Eiwa Kasei K.K.) as a foaming agent, 0.05 parts by weight of trimethylolpropane trimethacrylate (manufactured by Shin-Nakamura Kagaku K.K.) as a cross-linking aid, and 0.5 parts by weight of tetrakis [methylene-3 (3,5-di-tert-butyl-4-hydroxyphenyl) propionate] methane (*Irganox 1010*, manufactured by Chiba Geigy) as an antioxidant, and blended by means of a Henschel mixer at 30°C and 500 rpm for 2 minutes. The resulting mixture was introduced into a 50-mm-ϕ single screw extruder having a T die through which it was extruded at 160°C to produce a sheet of 1.0 mm in thickness.

This sheet was irradiated by an electron beam of 750 kV to cause cross-linking. Incidentally, the amount of electron beam irradiated was determined such that the cross-linking degree was about 40%.

10 cross-linked sheets were laminated and placed in a closed high-pressure vessel of 10 mm × 50 mm × 70 mm, and pressurized at 165°C and 50-70 atms. Finally, the closed high-pressure vessel was opened at 230°C to provide an integral cross-linked foam of 30 mm × 150 mm × 210 mm.

The integral cross-linked elastomer foam thus obtained was measured with respect to cross-linking degree, density, tensile strength, tensile elongation, tear strength and compression hardness. Also, the cells of the foams were microscopically observed.

The results are shown in Table 3 together with the cross-linking method, the foaming method, the pressurizing time and the foaming time.

Incidentally, for comparison, with respect to sheets (thickness : 3 mm) foamed under normal pressure from the resin composition in Example 11, the above properties were similarly measured. The results are also shown in Table 3.

Comparative Examples 9 and 10

Examples 10 and 11 were repeated except for mixing 100 parts by weight of the resin component with 15 parts by weight of azodicarbonamide (manufactured by Eiwa Kasei K.K.) as a foaming agent, 0.05 parts by weight of trimethylolpropane trimethacrylate (manufactured by Shin-Nakamura Kagaku K.K.) as a cross-linking aid, 0.5 parts by weight of tetrakis [methylene-3 (3,5-di-tert-butyl-4-hydroxyphenyl) propionate] methane (*Irganox 1010*, manufactured by Chiba Geigy) as an antioxidant, and 0.3 parts by weight of dicumyl peroxide (PERCUMYL D manufactured by Nippon Oil and Fats Co., Ltd.) as a cross-linking agent to form a sheet.

This sheet was heated at 170°C for 30 minutes to cause a cross-linking reaction up to a cross-linking degree of about 40%. The cross-linked sheet was then foamed in the same manner as in Example 10.

The cross-linked elastomer foam thus obtained was measured with respect to cross-linking degree, density, tensile strength, tensile elongation, tear strength and compression hardness. Also, the cells of the foam were microscopically observed.

The results are shown in Table 3 together with the cross-linking method, the foaming method, the pressurizing time and the foaming time.

Table 3

| | Example No. 10 | Example No. 11 | Comparative Example No. 8 | Comparative Example No. 9 | Comparative Example No. 10 |
|---|---|---|---|---|---|
| **Composition of Resin Components (Parts by Weight)** | | | | | |
| EVA | 50 | – | – | 50 | – |
| EPDM | 50 | – | – | 50 | – |
| EPR | – | 70 | 70 | – | 70 |
| BPP | – | 25 | 25 | – | 25 |
| BR | – | 5 | 5 | – | 5 |
| SO | – | 10 | 10 | – | 10 |
| **Production Conditions** | | | | | |
| Cross-linking Method(1) | EB | EB | EB | PO | PO |
| Foaming Method (2) | P | P | NP | P | P |
| Pressurizing Time (minutes) | 5 | 5 | – | 20 | 20 |
| Foaming Time (minutes) | 8 | 10 | 2* | 15 | 17 |

Table 3 (Continued)

| Properties of Cross-linked Foam | Example No. 10 | Example No. 11 | Comparative Example No. 8 | Comparative Example No. 9 | Comparative Example No. 10 |
|---|---|---|---|---|---|
| Cross-Linking Degree (%) | 43 | 42 | 42 | 41 | 40 |
| Density after Foaming ($g/cm^3$) | 0.032 | 0.032 | 0.033 | 0.033 | 0.032 |
| Tensile Strength(3) ($kg/cm^2$) | 9.7/8.9 | 8.5/7.5 | 7.2/6.8 | 8.7/8.1 | 7.0/6.5 |
| Tensile Elongation(4) (%) | 450/400 | 370/350 | 350/300 | 350/330 | 320/280 |
| Tear Strength(5) (kg/cm) | 10.5/11.5 | 7.2/8.5 | 7.2/7.8 | 9.5/10.5 | 6.8/7.5 |
| Compression Hardness(6) ($kg/cm^2$) | 0.15 | 0.30 | 0.40 | 0.30 | 0.35 |
| Cells | Fine | Fine | Large | Large | Large |

Note *: Time during which the foaming was conducted in an air oven at 210°C under normal pressure.

Note
(1) : "EB" denotes those cross-linked by irradiation by electron beam, and "PO" denotes those cross-linked by an organic peroxide.
(2) : "P" means a case where the heating was conducted under pressure and then the pressure to cause foaming was released, and "NP means a case where the heating was conducted under normal pressure to cause foaming.
(3) : Measured according to JIS K6767, and showing a value in a longitudinal direction (MD) / a value in a transverse direction (TD).
(4) : Measured according to JIS K6767, and showing a value in a longitudinal direction (MD) / a value in a transverse direction (TD).
(5) : Measured according to JIS K6767, and showing a value in a longitudinal direction (MD) / a value in a transverse direction (TD).
(6) : Measured according to JIS K6767.

As is clear from Table 3, the elastomer foam in Example 11 produced by foaming an elastomer cross-linked by irradiation under pressure shows smaller compression hardness and much higher tensile strength, tensile elongation and tear strength than the foam in Comparative Example 8, which was produced by foaming under normal pressure. Also, the foams in Examples 10 and 11 show smaller compression hardness and much higher tensile strength, tensile elongation and tear strength than those in Comparative Examples 9 and 10 which were produced by cross-linking in the presence of organic peroxides.

As described above in detail, since in the method of the present invention the polyolefin composition is subjected to irradiation, laminated or pulverized, and charged into a closed high-pressure vessel, in which it is heated under pressure and foamed, the resulting integral cross-linked foam has a sufficient thickness even though it is cross-linked by irradiation. In addition, the integral cross-linked foam has uniform, fine cells.

Further, the method of the present invention can be conducted with extremely reduced time as compared with a case where the polyolefin is cross-linked by organic peroxides. Accordingly, the production efficiency of the present invention is extremely high.

## Claims

1. A method of producing a thick, integral cross-linked foam of a thermoplastic polyolefin comprising the steps of :
   (a) forming a polyolefin composition containing a foaming agent into a sheet at a temperature lower than the decomposition temperature of said foaming agent ;
   (b) irradiating said sheet to cause cross-linking thereof ;
   (c) laminating a plurality of the cross-linked sheets ;
   (d) heating the resulting laminate under pressure at a temperature not lower than the decomposition temperature of said foaming agent ; and
   (e) liberating the pressure of said laminate, thereby integrally foaming it.

2. The method of producing a thick, integral cross-linked foam of a thermoplastic polyolefin according to claim 1, wherein said thermoplastic polyolefin is crystalline polyolefin.

3. The method of producing a thick, integral cross-linked foam of a thermoplastic polyolefin according to claim 1, wherein said thermoplastic polyolefin is an olefinic elastomer.

4. The method of producing a thick, integral cross-linked foam of a thermoplastic polyolefin according to claim 3, wherein said olefinic elastomer composition comprises 100 parts by weight of a thermoplastic olefinic elastomer and 3-30 parts by weight of a butyl rubber.

5. The method of producing a thick, integral cross-linked foam of a thermoplastic polyolefin according to claim 3 or claim 4, wherein said olefinic elastomer composition further comprises 3-40 parts by weight of a mineral oil-type softening agent per 100 parts by weight of said thermoplastic olefinic elastomer.

6. A method of producing a thick, integral cross-linked foam of a thermoplastic polyolefin comprising the steps of:
   (a) forming a polyolefin composition containing a foaming agent into a sheet at a temperature lower than the decomposition temperature of said foaming agent ;
   (b) irradiating said sheet to cause cross-linking thereof ;

(c) pulverizing the cross-linked sheet ;
(d) heating the pulverized product under pressure at a temperature not lower than the decomposition temperature of said foaming agent ; and
(e) liberating the pressure of said product, thereby integrally foaming it.

**7.** The method of producing a thick, integral cross-linked foam of a thermoplastic polyolefin according to claim 6, wherein said thermoplastic polyolefin is crystalline polyolefin.

**8.** The method of producing a thick, integral cross-linked foam of a thermoplastic polyolefin according to claim 6, wherein said thermoplastic polyolefin is an olefinic elastomer.

**9.** The method of producing a thick, integral cross-linked foam of a thermoplastic polyolefin according to claim 8, wherein said olefinic elastomer composition comprises 100 parts by weight of a thermoplastic olefinic elastomer and 3-30 parts by weight of a butyl rubber.

**10.** The method of producing a thick, integral cross-linked foam of a thermoplastic polyolefin according to claim 8 or claim 9, wherein said olefinic elastomer composition further comprises 3-40 parts by weight of a mineral oil-type softening agent per 100 parts by weight of said thermoplastic olefinic elastomer.